# DEMANDE DE BREVET EUROPEEN

(11) **EP 2 578 916 A1**
(43) Date de publication de la demande: **10.04.2013**
(21) Numéro de dépôt: 12186383.1
(22) Date de dépôt: 27.09.2012
(51) Int. Cl.: F16L 3/26, F16L 7/00, F16L 9/18

(54) **Conduite de transport d'un fluide à double paroi, installation d'une telle conduite et aéronef comprenant une telle conduite**

(30) Priorité: 07.10.2011 FR 1103065
(71) Demandeur: Dassault Aviation, 75008 Paris (FR)
(72) Inventeur: Mercier, Paul-André, 33290 Le Pian-Medoc (FR)
(74) Mandataire: Blot, Philippe Robert Emile

(57) **Abrégé**

Cette conduite (1) comporte :
- un tuyau (3) de circulation du fluide,
- un tube extérieur (5) de protection, disposé autour dudit tuyau (3) coaxialement audit tuyau (3), et
- des moyens (9) de centrage dudit tuyau (3) dans le tube extérieur (5) de protection.

Ledit tube extérieur (5) de protection comprend :
- au moins une coque (21) en forme de tube creux présentant une section transversale supérieure à la section transversale dudit tuyau (3), et ménageant un espace annulaire (7) entre ledit tube creux et ledit tuyau (3) pour recevoir lesdits moyens (9) de centrage, et
- une enveloppe (23) enroulée sur la surface extérieure de ladite coque (21), l'enveloppe (23) entourant de manière étanche l'espace annulaire (7).

## Description

La présente invention concerne une conduite de transport d'un fluide, du type comprenant :
- un tuyau de circulation du fluide,
- un tube extérieur de protection, disposé autour dudit tuyau coaxialement audit tuyau, et
- des moyens de centrage dudit tuyau dans le tube extérieur de protection.

Elle s'applique en particulier à la pressurisation d'un réservoir de carburant dans un aéronef. La pressurisation du réservoir de carburant permet de garantir l'alimentation en carburant des moteurs à partir du réservoir même en cas de pannes des pompes d'alimentation.

Le réservoir de carburant est pressurisé grâce à un circuit de pressurisation, qui est en communication avec les sorties moteurs de l'aéronef pour générer la surpression et qui permet d'assurer une surpression contrôlée au niveau du réservoir de carburant.

Ce circuit de pressurisation est conformé de façon à présenter une ou plusieurs « boucles » (portions de circuits en forme de U renversé) disposées à l'intérieur du fuselage (par exemple autour d'un hublot) et qui sont surélevées par rapport au réservoir.

En effet, en l'absence de ces boucles, le carburant contenu dans les réservoirs localisés au niveau des ailes de l'aéronef pourrait risquer de s'écouler dans des zones non désirées du circuit de pressurisation en cas de déflexion importante de ces ailes.

Cette partie du circuit de pressurisation se situant dans la zone de la cabine de l'aéronef, il est également nécessaire de prévoir qu'en cas de fuite de carburant, celui-ci s'écoule hors de l'aéronef.

Pour prévenir de telles fuites, il est ainsi connu d'utiliser au sein du fuselage des conduites à double paroi, comprenant un tuyau intérieur de circulation de fluides, reliant l'intérieur du réservoir au circuit de pressurisation, et un tuyau extérieur entourant le tuyau intérieur au moins dans le fuselage. Un passage de circulation du carburant est prévu entre le tuyau intérieur et le tuyau extérieur, de manière à permettre un drainage d'une éventuelle fuite de carburant vers l'extérieur du fuselage.

Le tuyau extérieur est par exemple réalisé au moyen de deux demi-coquilles de forme semi-cylindrique, assemblées autour du tuyau intérieur. Ces demi-coquilles sont fixées l'une à l'autre par rivetage de leurs bords tombés, et sont par ailleurs fixées sur le fuselage.

Une telle solution présente plusieurs inconvénients.

Notamment, le taux de rebus lors de la fabrication de ces conduites à double paroi est important, toute erreur de dimensionnement étant susceptible de générer une fuite au niveau des plans de joint rivetés.

Par ailleurs, l'installation des demi-coquilles est souvent délicate. Notamment, la position de ces demi-coquilles n'est pas réglable en hauteur, de telle sorte qu'il est nécessaire d'adapter les supports de fixation des demi-coquilles aux cadres du fuselage et parfois même de limer ces cadres, ce qui génère l'émission d'un rapport de non-conformité ou de dérogation. En outre, les jeux réduits entre les bordures rivetées et les cadres du fuselage empêchent une installation efficace des matelas d'insonorisation du fuselage.

Pour réaliser ces conduites à double paroi, il est également connu de former un double tube comprenant deux tuyaux coaxiaux et d'insérer entre ces deux tuyaux un tapis perméable autorisant une circulation de fluide entre les deux tuyaux. Cependant, ce tapis constitue une surface développable et ne permet donc pas de réaliser des conduites à fort taux de courbure, nécessaires lorsque l'espace disponible est réduit.

L'invention a donc pour but de pallier ces inconvénients, et en particulier de proposer une conduite à double paroi avec des contraintes de fabrication et d'installation minimisées.

A cet effet, l'invention a pour objet une conduite du type précité, **caractérisée en ce que** ledit tube extérieur de protection comprend :
- au moins une coque en forme de tube creux présentant une section transversale supérieure à la section transversale dudit tuyau, et ménageant un espace annulaire entre ledit tube creux et ledit tuyau pour recevoir lesdits moyens de centrage, et
- une enveloppe enroulée sur la surface extérieure de ladite coque, l'enveloppe entourant de manière étanche l'espace annulaire.

Selon d'autres aspects de l'invention, la conduite comprend l'une ou plusieurs des caractéristiques suivantes :
- lesdits moyens de centrage comprennent un centreur tubulaire adapté pour être intercalé dans ledit espace annulaire entre une surface intérieure de ladite coque et une surface extérieure dudit tuyau ;
- ledit centreur est en forme de portion de cylindre, et comprend une surface intérieure adaptée pour venir en appui surfacique contre la surface extérieure dudit tuyau ;
- ledit centreur comprend au moins deux nervures longitudinales faisant saillie radialement depuis une surface extérieure dudit centreur et comprenant une surface propre à venir en appui surfacique contre la surface intérieure dudit tube extérieur ;
- lesdites nervures définissent au moins deux canaux longitudinaux de circulation d'un fluide ;
- ledit centreur est réalisé dans un matériau déformable, et comprend sur toute sa longueur une ouverture longitudinale propre à permettre l'installation dudit centreur par clipage autour dudit tuyau ;
- ladite coque comprend au moins deux coquilles de formes complémentaires, assemblées pour former ladite coque ;
- chaque coquille comporte un bord longitudinal droit et un bord longitudinal d'appui, le bord d'appui de chaque coquille recevant en appui surfacique le bord droit de l'autre coquille ;
- la conduite comprend en outre au moins une embase raccordée à au moins une extrémité longitudinale dudit tube extérieur, ladite embase comprenant une paroi longitudinale cylindrique comprenant une surface intérieure de forme conjuguée à la surface extérieure d'une extrémité longitudinale de ladite coque, et définissant une ouverture de sortie d'un fluide, et une paroi transversale de fixation faisant saillie radialement vers l'extérieur depuis ladite paroi longitudinale ;
- ladite enveloppe est réalisée en tissu composite imprégné.

L'invention a également pour objet un aéronef comprenant un fuselage délimitant un espace intérieur, caractérisé en ce qu'il comprend une conduite telle que définie plus haut, disposée au moins en partie à l'intérieur dudit fuselage, l'espace annulaire de ladite conduite étant relié fluidiquement à l'extérieur dudit fuselage.

L'invention a aussi pour objet un procédé d'installation d'une conduite de transport d'un fluide tel que décrit plus haut, comprenant :
- la fourniture dudit tuyau de circulation du fluide,
- l'installation desdits moyens de centrage autour dudit tuyau ; et
- l'installation dudit tube extérieur de protection autour desdits moyens de centrage,
caractérisé en ce que l'étape d'installation dudit tube extérieur de protection autour desdits moyens de centrage comprend une étape d'installation de ladite coque autour dudit tuyau et une étape d'enroulage de ladite enveloppe sur la surface extérieure de ladite coque.

L'invention sera mieux comprise à l'aide de la description qui va suivre donnée uniquement à titre d'exemple et faite en se référant aux dessins annexés sur lesquels :
- la Figure 1 est une vue en perspective d'une première portion d'une conduite selon un mode de réalisation de l'invention, dans laquelle une partie du tube extérieur de protection a été retirée ;
- la Figure 2 est une vue en coupe de la conduite de la Figure 1 selon le plan transversal P de la Figure 1 ;
- la Figure 3 est une vue en coupe selon un plan longitudinal de la conduite de la Figure 1 au niveau d'un raccord de cette conduite d'une part avec le fuselage et d'autre part avec le circuit de pressurisation ; et
- la Figure 4 est un schéma en perspective de l'intérieur du fuselage d'un aéronef comprenant une conduite selon l'invention.

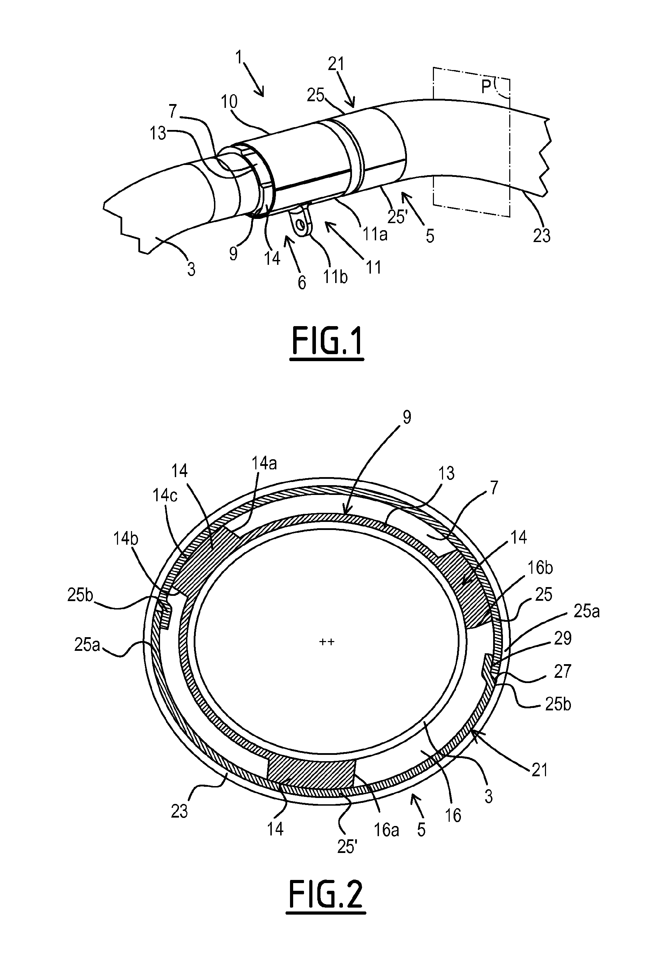

On a représenté sur la Figure 1 une conduite 1 selon un mode de réalisation de l'invention, destiné à la pressurisation d'un réservoir de l'aéronef.

La conduite 1 comprend ainsi une portion centrale destinée à être disposée à l'intérieur du fuselage d'un aéronef, et deux extrémités reliées respectivement à un réservoir de l'aéronef et à un circuit de pressurisation apte à engendrer une suppression contrôlée au niveau du réservoir de carburant par l'intermédiaire de la conduite. Le circuit de pressurisation est par exemple en communication avec les sorties moteur de l'aéronef comme précisé plus haut.

La conduite 1 comprend un tuyau 3 de circulation de fluide, un tube extérieur 5 de protection, des moyens de centrage du tuyau 3 dans le tube extérieur 5 et des moyens 6 de mise à la masse du tuyau 3.

Sur cette Figure 1, seule une partie du tube extérieur 5 et des moyens de centrage a été représentée.

Le tuyau 3 est un tube creux de section transversale circulaire. Le tuyau 3 relie fluidiquement le réservoir de carburant au circuit de pressurisation, par exemple à une zone comprise entre le fuselage et le carénage de l'aéronef.

Le tuyau 3 est avantageusement réalisé dans un matériau métallique, résistant à la pression, par exemple en titane T40.

Le tube extérieur 5 de protection est un tube creux disposé autour du tuyau 3, coaxialement à ce tuyau, au moins sur la portion du tuyau située dans le fuselage.

Le tube extérieur 5 comprend ainsi une portion centrale destinée à être comprise à l'intérieur du fuselage d'un aéronef et deux extrémités destinées à être raccordées au fuselage.

Le tube extérieur 5 présente un diamètre interne supérieur au diamètre externe du tuyau 3, de manière à ménager un espace annulaire 7 entre le tuyau 3 et le tube extérieur 5. Cet espace annulaire 7 est destiné à permettre la circulation de fluide entre le tuyau 3 et le tube extérieur 5, vers l'extérieur du fuselage, en cas de rupture ou de fuite du tuyau 3.

Les moyens de centrage comprennent au moins un centreur 9, de forme générale tubulaire. Le centreur 9 est interposé entre le tuyau 3 et le tube extérieur 5, coaxialement au tuyau 3.

En particulier, le centreur 9 est en appui surfacique contre la surface extérieure du tuyau 3 et contre la surface intérieure du tube extérieur 5, de manière à centrer le tuyau 3 dans le tube extérieur 5, et à éviter tout contact entre le tuyau 3 et le tube extérieur 5.

Les moyens 6 de mise à la masse du tuyau 3 comprennent un clinquant métallique 10, entourant une portion du centreur 9, et des moyens 11 de liaison du clinquant 10 à la masse. Ces moyens 11 comprennent un demi-cylindre 11a métallique, en appui surfacique contre le clinquant métallique 10, et une patte 11b de métallisation, reliée à la masse par l'intermédiaire d'un câble électrique.

Comme représenté sur la Figure 2, le centreur 9 comprend un élément tubulaire 13 creux, de section transversale sensiblement circulaire, disposé autour du tuyau 3 coaxialement à ce tuyau.

Le centreur 9 comprend en outre une pluralité de nervures longitudinales 14 réparties régulièrement sur la surface extérieure de l'élément tubulaire 13. Les nervures 14 font saillie radialement depuis la surface extérieure de l'élément tubulaire 13, sur toute la longueur de l'élément tubulaire 13.

Dans l'exemple représenté, le nombre de nervures 14 est de trois.

Elles comprennent ainsi deux surfaces latérales 14a, 14b sensiblement orthogonales à la surface extérieure de l'élément tubulaire 13, et une surface extérieure 14c d'appui, sensiblement parallèle à la surface extérieure de l'élément tubulaire 13. La surface extérieure 14c est en appui surfacique contre la surface intérieure du tube extérieur 5.

Les nervures 14 définissent entre elles trois canaux longitudinaux de circulation de fluide, permettant la circulation de fluide entre le tuyau 3 et le tube extérieur 5.

Le centreur 9 est muni sur toute sa longueur d'une ouverture longitudinale 16, définie entre deux rebords longitudinaux 16a, 16b. L'ouverture 16 s'étend sur un secteur angulaire compris entre 60 et 110°, par exemple égal à 100°.

Par ailleurs, le centreur est réalisé dans un matériau suffisamment élastique et déformable, par exemple en polycarbonate.

L'ouverture 16 peut ainsi être élargie de manière à former un passage au moins égal au diamètre externe du tuyau 3, de manière à installer le centreur 9 autour du tuyau 3, par clipage.

Le centreur 9 s'étend avantageusement sur une portion droite du tuyau 3. Avantageusement, la conduite 1 comprend plusieurs centreurs 9 placés entre le tuyau 3 et le tube extérieur 5 sur les portions droites du tuyau 3.

Le tube extérieur 5 comprend une coque 21 et une enveloppe 23 enroulée sur la surface extérieure de la coque 21.

La coque 21 est disposée autour du tuyau 3 et notamment autour du centreur 9, sur toute la longueur de la portion centrale du tuyau 3, à l'exception de la portion recouverte du clinquant métallique.

La coque 21 comprend deux demi-coquilles 25, 25' complémentaires, sensiblement identiques. La section transversale des demi-coquilles 25, 25' est sensiblement semi-circulaire. Chaque demi-coquille 25, 25' comprend ainsi deux bords longitudinaux 25a, 25b, et notamment un bord droit 25a et un bord d'appui 25b.

Chaque demi-coquille 25, 25' comprend, au voisinage de son bord d'appui 25b, un épaulement 27 dirigé vers l'intérieur de la demi-coquille 25, 25'. L'épaulement 27 est prolongé par une bordure d'appui 29 longitudinale, dont la surface extérieure reçoit en appui surfacique la surface intérieure du bord droit 25a de l'autre demi coquille 25', 25.

Le bord d'appui 25b de chaque demi-coquille 25, 25' reçoit ainsi en appui surfacique le bord droit 25a de l'autre demi-coquille 25', 25, permettant un assemblage étanche de ces demi-coquilles pour former la coque 21.

Les demi-coquilles 25, 25' sont par exemple réalisées en polycarbonate thermoformé.

L'enveloppe 23 est de forme tubulaire. Elle est constituée d'un matériau étanche, enroulé sur la surface extérieure de la coque 21, en formant avantageusement plusieurs couches superposées. L'enveloppe 23 entoure donc la coque 21 au plus près de celle-ci. Elle entoure de ce fait l'espace annulaire 7 de manière étanche, et prévient toute fuite de fluide vers l'extérieur de la conduite 1, à l'intérieur du fuselage.

L'enveloppe 23 est avantageusement réalisée à partir d'un bobinage de bandes de tissu composite imprégné, par exemple des bandes de largeur inférieure à leur longueur, par exemple de 50 mm de largeur, enroulées notamment en spirale autour de la coque.

Le tissu composite comprend par exemple des fibres de carbone ou de verre associées à une matrice, par exemple en résine, telle qu'une résine S.3798 du fabricant CIBA.

Le tuyau 3 relie fluidiquement un réservoir de l'aéronef au circuit de pressurisation, tandis que le tube extérieur 5 s'étend autour du tuyau 3 dans le fuselage, entre deux extrémités raccordées de manière étanche au fuselage.

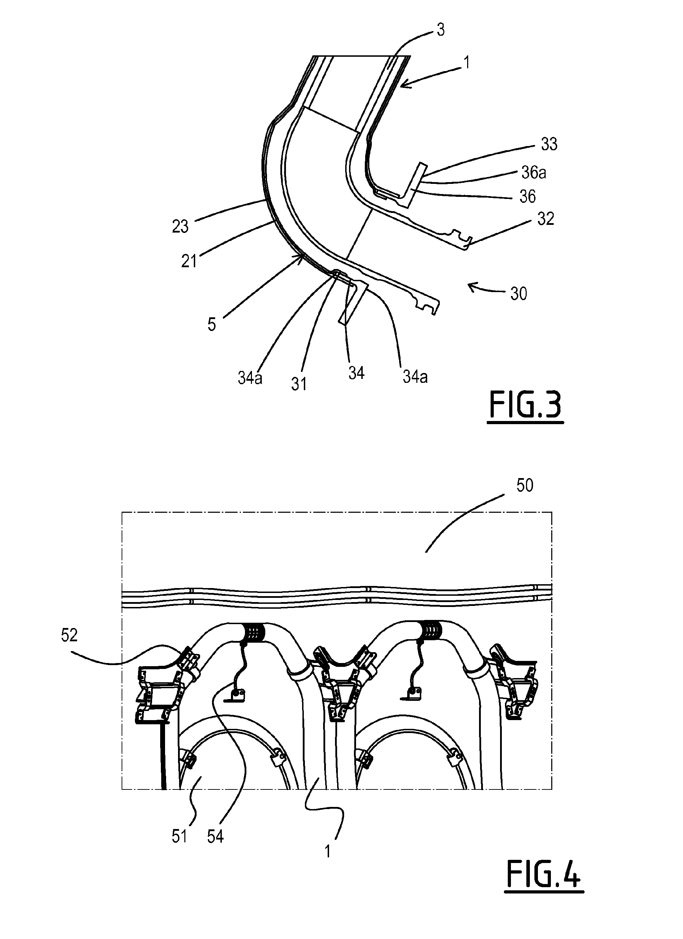

On a ainsi représenté sur la Figure 3 une extrémité 30 de raccord de la conduite 1 au circuit de pressurisation, également destinée à être fixée au fuselage d'un aéronef.

Cette extrémité 30 de raccord est coudée. A cette extrémité, la conduite 1 est donc dépourvue de centreur. En outre, l'extrémité longitudinale de la coque 21 comprend un rebord 31 de diamètre réduit, formant un épaulement de fixation de moyens de raccord.

A cette extrémité 30, le tuyau 3 comprend un raccord coudé 32 faisant saillie hors du tube extérieur 5. Ainsi, le tuyau 3 est propre à être inséré à travers une ouverture pratiquée dans le fuselage de l'aéronef, tandis que le tube extérieur 5 reste à l'intérieur du fuselage. Avantageusement, cette ouverture est de section supérieure à la section du tuyau 3, mais inférieure à la section du tube 5.

La conduite 1 comprend en outre à cette extrémité 30 des moyens de raccord, permettant de fixer de manière étanche le tube extérieur 5 au fuselage.

Ces moyens de raccord comprennent une embase 33. L'embase 33 comprend une paroi longitudinale 34 sensiblement cylindrique, coaxiale au tube extérieur 5. La paroi longitudinale 34 est définie entre un rebord extérieur 34a circulaire, orienté vers l'extrémité 30, et un rebord intérieur 34b circulaire.

La paroi longitudinale 34 comprend une surface intérieure de forme conjuguée à la surface extérieure du rebord 31. Ainsi, la surface intérieure de la paroi longitudinale 34 est en appui surfacique contre le rebord 31, et sa surface extérieure est recouverte par l'enveloppe 23.

L'embase 33 comprend en outre une paroi transversale 36 de fixation, orthogonale au tube 5, formant une collerette. La paroi transversale 36 est de forme annulaire. Elle fait saillie radialement depuis le rebord extérieur 34a de la paroi longitudinale 34 vers l'extérieur du tube 5.

La paroi transversale 36 comprend une surface extérieure 36a, orientée vers le sortie du raccord coudé 32. La surface extérieure 36a est propre à venir en appui surfacique contre une surface intérieure du fuselage de l'aéronef.

La paroi transversale 36 est ainsi destinée à être fixée au fuselage de l'aéronef, à l'intérieur de ce fuselage.

L'embase 33 permet donc de relier le tube 5 au fuselage de manière étanche, c'est-à-dire en empêchant toute circulation de fluide de l'espace annulaire 7 dans le fuselage. En cas de fuite du tuyau 3, le fluide s'échappant de ce tuyau s'écoule dans l'espace annulaire 7 jusqu'à l'embase 33 et, à travers l'ouverture pratiquée dans le fuselage, hors du fuselage de l'aéronef.

La deuxième extrémité de raccord de la conduite 1, destinée à être reliée à un réservoir de carburant, est sensiblement identique à l'extrémité décrite en référence à la Figure 3. L'extrémité du tuyau 3 faisant saillie hors du tube 5 de protection, vers l'extérieur du fuselage, est alors destinée à être raccordée à un autre tuyau, relié au réservoir.

L'installation de la conduite 1 comprend dans un premier temps le clipage d'au moins un centreur 9 autour de la portion centrale du tuyau 3.

Une embase 33 est positionnée à chaque extrémité du tuyau 3, autour de ce tuyau.

Les deux demi-coquilles 25, 25' sont alors positionnées autour du tuyau 3, pardessus le centreur 9, pour former la coque 21 qui entoure entièrement la portion centrale du tuyau 3. Ces demi-coquilles 25, 25' sont par exemple maintenues provisoirement en position au moyen de bandes adhésives, avant le positionnement de l'enveloppe 23.

Les embases 33 sont par ailleurs placées aux extrémités de la coque 21, la surface intérieure de leur paroi longitudinale 34 étant en appui surfacique contre le rebord 31.

L'enveloppe 23 est alors enroulée tout autour de la coque 21, et en particulier au-dessus de la paroi longitudinale 34 des embases 33, de manière à fixer ces embases 33 au tube extérieur 5 de manière étanche.

Le tissu composite formant l'enveloppe 23 est ensuite séché et durci, par exemple en étuve, et des couches de finition, par exemple de la peinture et du vernis, sont appliquées sur l'enveloppe 23.

La conduite 1 est ensuite installée dans un aéronef, à l'intérieur du fuselage 50, comme représenté sur la Figure 4. La conduite est par exemple installée autour de hublots 51, le long du fuselage 50.

Par ailleurs, les deux extrémités du tuyau 3 sont insérées dans des ouvertures pratiquées dans le fuselage 50, et les embases 33 sont fixées de manière étanche à ce fuselage.

En outre, la conduite 1 est fixée au fuselage 50 au moyen de colliers à garniture 52, et les pattes 11b de métallisation reliées à la masse électrique par l'intermédiaire de câbles électriques 54.

On comprend de la description qui précède comment la conduite selon l'invention permet de protéger de manière efficace un tuyau de circulation du fluide sans induire de contraintes importantes d'installation.

Notamment, les demi-coquilles sont assemblées sans former de plan de joint, ce qui permet de supprimer les contacts entre la conduite et les cadres du fuselage.

Par ailleurs, en raison de l'absence de ce plan de joint pouvant générer des fuites, le taux de rebus lors de la fabrication est nettement diminué.

En outre, la fixation de la conduite au cadre est facilitée, l'insonorisation améliorée et les risques de vibration et de bruits de tuyauteries sont diminués.

Il devra toutefois être compris que les exemples de réalisation présentés ci-dessus ne sont pas limitatifs.

Notamment, la coque 21 ne comprend pas nécessairement deux demi-coquilles. Selon un mode de réalisation alternatif, la coque 21 comprend une coquille tubulaire munie d'une fente longitudinale et réalisée dans un matériau souple. La coque est alors placée autour du tuyau par clipage.

La coque 21 peut également être réalisée à partir d'au moins trois coquilles de formes complémentaires, qui sont assemblées pour former une coque de section transversale circulaire.

En outre, le centreur ne comprend pas nécessairement trois nervures. Selon un autre mode de réalisation, le centreur 9 comprend seulement deux nervures diamétralement opposées. Le centreur 9 peut alternativement comprendre plus de trois nervures, par exemple réparties régulièrement sur le centreur.

D'autres modes de réalisation peuvent bien sûr être envisagés.

## Revendications

1. Conduite (1) de transport d'un fluide, du type comprenant :
- un tuyau (3) de circulation du fluide,
- un tube extérieur (5) de protection, disposé autour dudit tuyau (3) coaxialement audit tuyau (3), et
- des moyens (9) de centrage dudit tuyau (3) dans le tube extérieur (5) de protection,
**caractérisée en ce que** ledit tube extérieur (5) de protection comprend :
- au moins une coque (21) en forme de tube creux présentant une section transversale supérieure à la section transversale dudit tuyau (3), et ménageant un espace annulaire (7) entre ledit tube creux et ledit tuyau (3) pour recevoir lesdits moyens (9) de centrage, et
- une enveloppe (23) enroulée sur la surface extérieure de ladite coque (21), l'enveloppe (23) entourant de manière étanche l'espace annulaire (7).

2. Conduite (1) selon la revendication 1, **caractérisée en ce que** lesdits moyens de centrage comprennent un centreur tubulaire (9) adapté pour être intercalé dans ledit espace annulaire (7) entre une surface intérieure de ladite coque (21) et une surface extérieure dudit tuyau (3).

3. Conduite (1) selon la revendication 2, **caractérisée en ce que** ledit centreur (9) est en forme de portion de cylindre, et comprend une surface intérieure adaptée pour venir en appui surfacique contre la surface extérieure dudit tuyau (3).

4. Conduite (1) selon la revendication 3, **caractérisée en ce que** ledit centreur (9) comprend au moins deux nervures (14) longitudinales faisant saillie radialement depuis une surface extérieure (13) dudit centreur (9) et comprenant une surface (14c) propre à venir en appui surfacique contre la surface intérieure dudit tube extérieur (5).

5. Conduite (1) selon la revendication 4, **caractérisée en ce que** lesdites nervures (14) définissent au moins deux canaux longitudinaux de circulation d'un fluide.

6. Conduite (1) selon l'une quelconque des revendications 2 à 5, **caractérisée en ce que** ledit centreur (9) est réalisé dans un matériau déformable, et comprend sur toute sa longueur une ouverture longitudinale (16) propre à permettre l'installation dudit centreur (9) par clipage autour dudit tuyau (3).

7. Conduite (1) selon l'une quelconque des revendications précédentes, **caractérisée en ce que** ladite coque (21) comprend au moins deux coquilles (25, 25') de formes complémentaires, assemblées pour former ladite coque (21).

8. Conduite (1) selon la revendication 7, **caractérisée en ce que** chaque coquille (25, 25') comporte un bord longitudinal droit (25a) et un bord longitudinal d'appui (25b), le bord d'appui (25b) de chaque coquille (25, 25 ') recevant en appui surfacique le bord droit (25a) de l'autre coquille (25, 25').

9. Conduite (1) selon l'une quelconque des revendications précédentes, **caractérisée en ce qu'il** comprend en outre au moins une embase (33) raccordée à au moins une extrémité (30) longitudinale dudit tube extérieur (5), ladite embase (33) comprenant une paroi longitudinale (34) cylindrique comprenant une surface intérieure de forme conjuguée à la surface extérieure d'une extrémité longitudinale de ladite coque (21), et définissant une ouverture de sortie d'un fluide, et une paroi transversale (36) de fixation faisant saillie radialement vers l'extérieur depuis ladite paroi longitudinale (34).

10. Conduite (1) selon l'une quelconque des revendications précédentes, **caractérisée en ce que** ladite enveloppe (23) est réalisée en tissu composite imprégné.

11. Aéronef comprenant un fuselage (50) délimitant un espace intérieur, **caractérisé en ce qu'il** comprend une conduite (1) selon l'une quelconque des revendications précédentes, disposée au moins en partie à l'intérieur dudit fuselage (50), l'espace annulaire (7) de ladite conduite (1) étant relié fluidiquement à l'extérieur dudit fuselage (50).

12. Procédé d'installation d'une conduite (1) de transport d'un fluide selon l'une quelconque des revendications 1 à 10, comprenant :
- la fourniture dudit tuyau (3) de circulation du fluide,
- l'installation desdits moyens (9) de centrage autour dudit tuyau (3) ; et
- l'installation dudit tube extérieur (5) de protection autour desdits moyens (9) de centrage,
**caractérisé en ce que** l'étape d'installation dudit tube extérieur (5) de protection autour desdits moyens (9) de centrage comprend une étape d'installation de ladite coque (21) autour dudit tuyau (3) et une étape d'enroulage de ladite enveloppe (23) sur la surface extérieure de ladite coque (21).
